# NEUE EUROPÄISCHE PATENTSCHRIFT

(11) **EP 0 621 326 B2**
(45) Veröffentlichungstag und Bekanntmachung des Hinweises auf die Entscheidung über den Einspruch: **29.12.2004**
(45) Hinweis auf die Patenterteilung: 17.06.1998
(21) Anmeldenummer: 94105708.5
(22) Anmeldetag: 13.04.1994
(51) Int. Cl.: C09J 7/02

(54) **Verwendung eines Extruders zum Aufkonzentrieren einer Selbstklebemasse auf Acrylathotmelt-Basis.**
Use of an extruder for concentrating a self-adhesive composition based on acrylic hot-melt polymer.
Utilisation d'une extrudeuse pour concentrer une composition auto-adhésive à base de polymère acrylique thermofusible.

(30) Priorität: 21.04.1993 DE 4313008
(43) Veröffentlichungstag der Anmeldung: 26.10.1994
(73) Patentinhaber: tesa AG, 20253 Hamburg (DE)
(72) Erfinder: Harder, Christian, Dr., D-22589 Hamburg (DE); Biethahn, Klaus, D-22850 Norderstedt (DE); Kummer, Andreas, Dr., D-21147 Hamburg (DE); Tiburg, Roger, D-21079 Hamburg (DE)

(56) Entgegenhaltungen:
- EP-A- 0 367 054
- DE-A- 1 940 549
- DE-A- 3 728 991
- DE-A- 3 942 232
- US-A- 4 619 979
- US-A- 4 695 608
- US-A- 4 906 421
- DATABASE WPI Week 9035, Derwent Publications Ltd., London, GB; AN 90-265703 & JP-A-2 187 404 (ASAHI CHEMICAL IND.) 23. Juli 1990
- Hinkamp, Polymer 8/1967, 381-384
- Fikentscher, Cellulose Chemie 1932, Bd 13, Seiten 58-64 und 71-74
- Kunststoff-Lexikon, Seite 255, 7. Auflage, Carl-Hanser Verlag München
- Rauwendaal, Chris, "Polymer Extrusion", Hanser Publishers, Munich 1986, S. 25-26
- Nangeroni J.F.et al., "Polymer Process Engineering", 3(1&2), 85-95,1985
- Römpp Chemie Lexikon, 9. Auflage 1990, S. 2418

## Beschreibung

Die Erfindung betrifft die Verwendung eines Extruders zum Aufkonzentrieren oder Entgasen einer Lösung einer Selbstklebemasse auf Acrylathotmelt-Basis mit einem K-Wert von mindestens 60 zu einem als Hotmelt für ein Pflaster oder für ein technisches Klebeband verarbeitbaren System.

Einerseits bekannt sind Selbstklebemassen auf Acrylathotmelt-Basis, die jedoch wegen ihres niedrigen K-Wertes für viele Anwendungen nicht oder nur unzureichend geeignet sind. So gibt es handelsüblichederartige Massen als niedrigviskose Systeme z.B. als HRJ 4326 (Schenectady Chemicals) mit einem K-Wert von 31 (Beiersdorf Prüfmethode) und einer Viskosität von 3,8 Pa·s bei 177°C (350°F), oder auch ACRONAL DS 3429 X (BASF) mit einem K-Wert von 40 und einer Viskosität von 13 Pa·s bei 120°C. Diese und ähnliche Massen sind jedoch zum Beschichten von Geweben und Vliesen etwa als Träger für Selbstklebebänder oder Pflaster nicht geeignet, da sie durch derartige Träger durchschladen. Zudem ist insbesondere für technische Anwendungen ihr klebtechnisches Niveau zu niedrig.

Die Beschränkung derartiger bekannter Massen auf niedrig viskose Systeme ist insbesondere darauf zurückzuführen, das der nötige Aufkonzentrationsschritt hohe Anforderungen an das Fließverhalten und die Beständigkeit bezüglich Wärme und Scherung stellt. So werden die in Lösung hergestellten Klebmassen zumeist direkt im Kessel aufkonzentriert. Dieser Vorgang erfordert:
- Eine niedrige Viskosität des Systems auch im hochkonzentrierten Zustand, um den Entgasungs- und Mischprozess effektiv gestalten zu können.
- Eine niedrige Viskosität der Massen, um diese in wirtschaflicher Weise wieder aus dem Kessel entfernen zu können.

Unter Einsatz der gleichen Technologie würden höher viskose unter anderem folgende Nachteile aufweisen:
- Höher viskose Systeme würden hier zu einem deutlich erhöhten Bedarf an Wärmeenergie führen, was zu erhöhter Temperaturbelastung der Massen (Nebenreaktionen/Zersetzungen) führen würde.
- Bei Anwendung niedrigerer Temperaturen ergibt sich eine entsprechend hohe Scherbelastung der Massesystems.

Aus den oben genannten Gründen besteht ein Konflikt derart, dass das Aufkonzentrieren oder Entgasen einer Lösung einer Selbstklebemasse auf Acrylathotmelt-Basis möglichst niedrige K-Werte fordert, während aber zur Erzielung einer hohen Scherfestigkeit der Selbstklebemasse eine hohe Viskosität, also hohe K-Werte, gewünscht sind.

Es sind Schmelzhaftkleber mit höheren K-Werten bekannt, so aus DE 37 28 991 A1 und DE 39 42 232 A1.

Die DE 39 42 232 A1 lehrt Selbstklebemassen auf Acrylathotmeltbasis mit K-Werten > 60. Die Verwendung eines Extruders zum Aufkonzentrieren ist dort nicht offenbart.

Die DE OS 37 28 991 A1 lehrt Acrylathotmelts die unter anderem als Schmelzhaftkleber geeignet sind, mit K-Werten > 60. Soweit bei der Herstellung Lösungsmittel mitverwendet wurden werden diese nach Beendigung der Polymerisation durch Destillation bei erhöhter Temperatur, beispielsweise bei Temperaturen bis etwa 200°C gegebenenfalls unter vermindertem Druck abgetrennt. Die Verwendung eines Extruders für die Lösungsmittel-Abtrennung ist nicht vorgeschlagen.

EP 0 367 054 B1 betrifft laut dem Hauptanspruch unter Luftsauerstoff-Atmosphäre durch UV-Strahlen vernetzbare Massen auf Basis, (Meth)acrylsäureester-Copolymerisaten eines K-Wertes von 10 bis 100. Dort wird auch die Verwendung solchen Massen als Schmelzhaftkleber beschrieben.

Das Lösemittel (gemisch) und gegebenenfalls flüchtige Anteile werden nach beendeter Polymerisation abdestilliert. Wobei Reste unter vermindertem Druck, bevorzugt bei über 120°C entfernt werden. Die flüchtigen Anteile können jedoch auch in Entgasungsgeräten wie Extrudern und Fallfilmverdampfern entfernt werden. Das Entfernen der Lösemittel in einem Extruder ist dort nicht offenbart.

Aufgabe der Erfindung war es, ein Verfahren zu schaffen, um Selbstklebemassen auf Acrylathotmelt-Basis, die einen K-Wert von mindestens 60 haben, zu Konzentrieren bzw. zu entgasen, wobei sich die erhaltenen Massen zur Herstellung eines Pflaters oder technischen Klebebandes eignen müssen.

Gelöst wird diese Aufgabe erfindungsgemäß durch die Verwendung eines Extruders zum Aufkonzentrieren beziehungsweise Entgasen, wie dies der Anspruch 1 im Einzelnen lehrt mit bevorzugten Weiterbildungen gemäß den Unteransprüchen 2 bis 5.

Der Einsatz eines Entgasungs-Extruders für die Zwecke der Erfindung lag dabei aus mehreren Gründen nicht im Blickfeld des Fachmanns. Denn es war durchaus zu vermuten, dass bei hohen K-Werten des Acrylat-Hotmelt, wie solchen von mindestens 60, in Konkurrenz zum Entgasen auch ein Abbau der Makromoleküle durch Scherkräfte und Wärmebehandlung erfolgt, auch eine Vergelung aufgrund reaktiver Co-Komponenten, neben grundsätzlichen Bedenken gegen einen zu hohen Lösungsmittelgehalt, wie sich nun zeigt in Form eines Vorurteils, für derart hochmolekulare und klebende Produkte überhaupt einen Entgasungs-Extruder einzusetzen. Zwar ist es bereits bekannt, so aus der EP-A-0 411 510, im Extruder aus einer Polymer-Lösung flüchtige Bestandteile abzuziehen, wie dies insbesondere zum Entfernen von Restmonomeren geschieht. In dieser EP-A- wird aber wiederum, wie im Stand der Technik üblich, mit verschiedenartigen Thermoplasten gearbeitet, wie Polycarbonat, Polyphenylenether oder Polystyrol, die aber eben unvergleichlich sind mit den erfindungsgemäß eingesetzten Acrylat-Hotmelts mit ihrem hohen K-Wert. Denn in einem Entgasungs-Extruder sollten Klebmassen nach dem Urteil des Fachmanns kaum zu fördern sein.

Bevorzugt werden erfindungsgemäß die in den Unteransprüchen genannten Maßnahmen ergriffen. Dabei werden als Lösungsmittel z.B. verwendet: Benzin, Aceton, Essigester, Toluol, C1-C5 Alkohole, C5-C9 Alkane sowie Mischungen davon. Zur Aufkonzentration können zusätzlich geeignete Maßnahmen ergriffen werden, wie der Einsatz von Schleppmitteln, z.B. Wasser, zur Förderung des Entgasungsprozesses. Auch zum Brechen des Vakuums kann bevorzugt Schutzgas eingesetzt werden, wie Stickstoff oder Argon. Insbesondere günstig ist es, wenn der verwendete Extruder eine oder vorzugsweise mehrere unabhängig voneinander temperierbare Zonen aufweist. Auch die Förderleistung wird bevorzugt durch Änderung der Drehgeschwindigkeit und der Schneckenkonfiguration an das jeweils zu verarbeitende Acrylathotmelt angepaßt.

So ergeben sich erfindungsgemäß Vorteile, die der Fachmann nicht vorhersehen konnte.
- Auch Massen mit hohen K-Werten lassen sich materialschonend entgasen, da die Temperatur und Scherung dem Bedarf angepaßt werden kann. Einschränkungen bzgl. Rezeptierungsmöglichkeiten konnten im Vergleich zu den niedrigviskosen Systemen aufgehoben werden.
- Ein Fließen der Massen im 100%-Stadium ist aufgrund der mechanischen Förderung nicht zwingend erforderlich.
- Im Gegensatz zur Batchfahrweise ist eine kontinuierliche Produktion möglich.
- Die Massen mit den hohen K-Werten erfüllen auch die Anforderungen für ein technisches Klebeband.
- Die Scherfestigkeiten dieser Systeme sind höher, der notwendige Veredelungsaufwand geringer.

Im folgenden soll die Erfindung anhand von Ausführungsbeispielen erläutert werden.

### BEISPIEL 1

Die folgenden Monomergemische (Mengenangaben in Gew.-%) wurden in Lösung copolymerisiert. Die Polymerisationsansätze bestanden aus 60 Ges-% der Monomergemische sowie 40 Gew.-% Lösungsmittel.

Die Lösungen wurden in üblichen Reaktionsgefäßen aus Glas oder Stahl (mit Rückflußkühlen, Rühren, Temperaturmaßeinhaft und Gaseinleitungsrohr)zunächst durch Spülen mit Stickstoff von Sauerstoff befreit und dann zum Sieden erwärmt. Durch Zusatz eines für die radikalische Polymerisation üblichen Initiators, wie Peroxiden oder Azo-Initiatoren wurde die Polymerisation ausgelöst.

Während der Polymerisationszeit von etwa 20 Stunden wurde je nach Viskosität ggf. mehrmals mit weiterem Lösungsmittel verdünnt, so daß die fertigen Polymerlösungen Feststoflgehalte von etwa 35 bis 55 Gew.-% aufwiesen.

Eine 40%ige Lösung dieses Acrylsäure(ester)copolymerisates mit einem K-Wert von 68 (76 % Ethylhexylacrylat, 21 % n-Butylacrylat und 3 % Acrylsäure) in einem Gemisch aus Benzin (60/95) und Aceton im Verhältnis 3:1 wurde mittels eines Einschneckenextruders (d=90, 1=38d) in Polymer und Lösungsmittel aufgetrennt. Der Extruder bestand aus insgesamt drei voneinander unabhängig temperierbaren Zonen von denen jede mit einem Vakuumanschluß und einer Einspeisung von Stickstoff versehen war. Die Vakua der Zonen waren ebenfalls voneinander unabhängig sowohl über die nachfolgenden Vakuumpumpen als auch durch die Regelung der Stickstoffeinspeisung einstellbar. Die Polymerlösung wurde mit einer Pumpe in den Extruder zwischen erster und zweiter Zone gefördert, so daß in einer Rückwärts- und zwei Vorwärtsentgasungsstufen die Gasphase über der Polymerlösung entfernt wurde. Der Eingangsmassenstrom der Polymerlösung betrug 18 kg/h, die Schneckendrehzahl 100 U/min. Die Temperatur der Rückwärtsentgasung betrug 60°C bei einem Druck von 270 mbar, die Temperatur der zweiten und dritten Stufe wurde auf 40 bzw. 50°C bei Drucken von 310 respektive 40 mbar eingestellt. Am Kopf des Extruders konnte das gelfreie Polymer mit einem Massenstrom von 7,2 kg/h entnommen werden. Der Anteil flüchtiger Stoffe im Polymeren betrug 0,8 %, der K-Wert 68.

Das so erhaltene Acrylat-Hotmelt läßt sich in an sich bekannter Weise auf Gewebeträger beschichten, ohne durchzuschlagen und ergibt Produkte mit hervorragenden klebtechnischen Eigenschaften.

### Beispiel 2

Eine 45%ige Lösung dieses Acrylsäure(ester)copolymerisats mit einem K-Wert von 65 (33% Ethylhexylacrylat, 64% Butylacrylat und 3% Acrylsäure) in Aceton wurde entsprechend dem in Beispiel 1 beschriebenen Verfahren aufkonzentriert. Der Anteil der flüchtigen Stoffe betrug 0,8%, der K-Wert 65.

Das erhaltene Massesystem kann mit Füllstoffen, gemäß EP-0S 431 336 mit Glasmikrovollkugeln abgemischt, zu entsprechenden Produkten in an sich bekannter Weise verarbeitet werden, die hohe klebtechnische Eigenschaften aufweisen.

## Patentansprüche

1. Verwendung eines Extruders zum Aufkonzentrieren bzw. Entgasen einer Lösung einer Selbstklebemasse auf Acrylathotmelt-Basis mit einem K-Wert von mindestens 60 zu einem als Hotmelt für ein Pflaster oder für ein technisches Klebeband verarbeitbaren System mit einem Restlösungsmittelgehalt unter 1 Gew.%, wobei als Selbstklebemassen Copolymerisate aus (Meth)-acrylsäure und deren Estern mit 1 - 25 C-Atomen eingesetzt werden.

2. Verwendung nach Anspruch 1, wobei eine Selbstklebemasse auf Acrylathotmelt-Basis mit einem. K-Wert von 65 - 80 eingesetzt wird.

3. Verwendung nach Anspruch 1, **dadurch gekennzeichnet, daß** die Lösung der Masse 5 - 80 Gew.-%, insbesondere 30 - 70 Gew.-% Lösungsmittel enthält.

4. Verwendung nach Anspruch 1, **dadurch gekennzeichnet, daß** handelsübliche Lösungsmittel eingesetzt werden, insbesondere niedrig siedende Kohlenwasserstoffe, Ketone, Alkohole und/oder Ester.

5. Verwendung nach Anspruch 1, **dadurch gekennzeichnet, daß** Einschnecken-, Zweischnecken- oder Mehrschneckenextruder mit einer oder insbesondere zwei oder mehreren Entgasungseinheiten eingesetzt werden.

## Claims

1. Use of an extruder for concentrating or devolatilizing a solution of a self-adhesive material based on acrylate hotmelt with a K value of at least 60 to give a system having a residual solvent content of less than 1% by weight, the self-adhesive materials used being copolymers of meth(acrylic) acid and esters thereof having 1 - 25 C atoms, which system can be processed as hotmelt for a plaster or for an industrial self-adhesive tape.

2. Use according to Claim 1, a self-adhesive material based on acrylate hotmelt with a K value of 65 to 80 being used.

3. Use according to Claim 1, **characterized in that** the solution of the material contains 5 - 80 % by weight, in particular 30 - 70 % by weight, of solvent.

4. Use according to Claim 1, **characterized in that** commercial solvents are used, in particular low-boiling hydrocarbons, ketones, alcohols and/or esters.

5. Use according to Claim 1, **characterized in that** single-screw, twin-screw or multiscrew extruders having one or, in particular two or more devolatilization units are used.

## Revendications

1. Utilisation d'une extrudeuse pour la concentration ou le dégazage d'une solution d'une composition autocollante à base d'adhésif thermofusible d'acrylate présentant un indice K d'au moins 60 pour donner lieu à un système transformable en tant qu'adhésif thermofusible pour un pansement ou pour un ruban adhésif industriel, présentant une teneur en solvant résiduel inférieure à 1 % en poids, des copolymères d'acide (méth)acrylique et leurs esters ayant de 1 à 25 atomes de carbone étant utilisés en tant que compositions autocollantes.

2. Utilisation selon la revendication 1, une composition autocollante à base d'adhésif thermofusible d'acrylate présentant un indice K de 65 à 80 étant utilisée.

3. Utilisation selon la revendication 1, **caractérisée en ce que** la solution de la composition contient de 5 à 80 % en poids, en particulier de 30 à 70 % en poids de solvant.

4. Utilisation selon la revendication 1, **caractérisée en ce que** l'on utilise des solvants disponibles dans le commerce, en particulier des hydrocarbures à faible point d'ébullition, des cétones, des alcools et/ou des esters.

5. Utilisation selon la revendication 1, **caractérisée en ce que** l'on utilise des extrudeuses mono-vis, bi-vis ou multi-vis comprenant une ou en particulier deux ou plus unités de dégazage.
